# EUROPÄISCHE PATENTSCHRIFT

(11) **EP 1 224 231 B1**
(45) Veröffentlichungstag und Bekanntmachung des Hinweises auf die Patenterteilung: **14.06.2006**
(21) Anmeldenummer: 00967850.9
(22) Anmeldetag: 10.10.2000
(51) Int. Cl.: C08F 226/10, C08F 218/08

(54) **VERDICKER FÜR WÄSSRIGE DISPERSIONEN**
THICKENER FOR AQUEOUS DISPERSIONS
EPAISSISSANT POUR DISPERSIONS AQUEUSES

(30) Priorität: 19.10.1999 DE 19950229
(43) Veröffentlichungstag der Anmeldung: 24.07.2002
(73) Patentinhaber: BASF Aktiengesellschaft, 67056 Ludwigshafen (DE)
(72) Erfinder: SCHNELL, Klaus, 67434 Neustadt (DE); KERBER, Michael, 69469 Weinheim (DE); SCHUPP, Eberhard, 67269 Grünstadt (DE); WISTUBA, Eckehardt, 67098 Bad Dürkheim (DE)
(86) Internationale Anmeldenummer: PCT/EP2000/009921
(87) Internationale Veröffentlichungsnummer: WO 2001/029100

(56) Entgegenhaltungen:
- EP-A- 0 688 799
- US-A- 2 667 473
- US-A- 3 166 525

## Beschreibung

Die Erfindung betrifft die Verwendung
eines Copolymerisats aus
a) 30 bis 79,5 Gew.-% N-Vinylpyrrolidon
b) 20 bis 69,5 Gew.-% Vinylacetat
c) 0,5 bis 25 Gew.-% eines Monovinylesters einer C₄- bis C₂₀-Mono(?)carbonsäure
d) 0 bis 40 Gew.-% einer weiteren, copolymerisierbaren, ethylenisch ungesättigten Verbindung,
wobei sich die Gewichtsprozente jeweils auf das Copolymerisat beziehen,
als Verdicker für wäßrige Polymerdispersionen

Wäßrige Polymerdispersionen werden als Bindemittel für umweltfreundliche Klebstoffe, Anstrichmittel, Imprägnierungsmittel oder sonstige Beschichtungsmittel verwendet. Je nach Verwendungszweck können die Polymerdispersionen weitere Zusatzstoffe enthalten; genannt seien z.B. Füllstoffe, Pigmente, Pigmentverteiler, Filmbindemittel (Weichmacher, Lösemittel, Harze), Entschäumer, Netzmittel und vor allem Verdicker.

Durch den Zusatz von Verdickern wird die gewünschte Viskosität und Rheologie eingestellt.

Die Verdicker sind daher von großer Bedeutung für Verarbeitungseigenschaften wie Fließverhalten, Verstreichbarkeit. Die Eigenschaften der nach Trocknung erhaltenen Beschichtungen sollen jedoch durch den Verdicker nicht negativ beeinflußt werden. Insbesondere sollten Verdicker nicht zu einer Verminderung der Wasserfestigkeit oder zu einer verschlechterten Haftung bei Klebstoffen führen.

Übliche organische Verdicker, wie z.B. Hydroxyethylcellulose, Polyvinylalkohol und Polyacrylsäure (Acrylatverdicker) beeinflussen die Wasserfestigkeit und das Haftungsspektrum oft negativ.

Anorganische Verdicker, z.B. Betonit, wirken letztlich wie ein Füllstoff. Sie führen bei Klebstoffen zu einer geringeren Haftung und bewirken im allgemeinen eine Trübung der erhaltenen Beschichtung.

Auch Verdicker auf Basis N-Vinylpyrrolidon sind bereits bekannt.

Die Verwendung von N-Vinylpyrrolidoncopolymerisaten ist z.B. in DE-A-2224129 beschrieben.

Bekannt sind z. B. handelsübliche Verdicker auf Basis von Copolymerisaten N-Vinylpyrrolidon und Vinylpropionat, (Collacral®, BASF).

Die Wirksamkeit dieser Verdicker ist oft noch nicht ausreichend; es ist gewünscht, die benötigte Verdickermenge weiter zu verringern. Insbesondere soll der Verdicker im sauren, neutralen und alkalischen pH Bereich gleich gut wirksam sein.

Aufgabe der vorliegenden Erfindung waren daher Verdicker für wäßrige Polymerdispersionen, welche hohe Wirksamkeit haben, d.h. schon in geringen Mengen wirken, und die obigen Nachteile nicht oder nur in geringem Umfang zeigen.

Demgemäß wurde die eingangs definierte Verwendung des Copolymerisats als Verdicker für wäßrige Polymerdispersionen gefunden.

Ein Copolymerisat besteht aus
a) 30 bis 79,5 Gew.-%, vorzugsweise 35 bis 74,5 Gew.-%, besonders bevorzugt 50 bis 69 Gew.-% N-Vinylpyrrolidon
b) 20 bis 69,5 Gew.-%, vorzugsweise 25 bis 64,5 Gew.-%, besonders bevorzugt 30 bis 49 Gew.-% Vinylacetat
c) 0,5 bis 25 Gew.-%, vorzugsweise 0,5 bis 15 Gew.-% besonders bevorzugt 1 bis 10 Gew.-% eines Monovinylesters einer C₄ bis C₂₀ Monocarbonsäure und
d) 0 bis 40 Gew.-%, vorzugsweise 0 bis 30 Gew.-%, besonders bevorzugt 0 bis 15 Gew.-% einer weiteren, copolymerisierbaren, ethylenisch ungesättigten Verbindung.

Die Gewichtsangaben sind auf das Copolymerisat bezogen.

Bei Monomeren c) handelt es sich vorzugsweise um einen Monovinylester einer verzweigten Monocarbonsäure, d.h. einer Monocarbonsäure mit mindestens einem tertiären oder einem quaternären C-Atom. Tertiäre C-Atome haben 3 benachbarte C-Atome und ein H-Atom. Quaternäre C-Atome haben 4 benachbarte C-Atome und kein H-Atom.

Bevorzugt haben die Monocarbonsäuren ein tertiäres oder quaternäres C-Atom, besonders bevorzugt ist das tertiäre oder quaternäre C-Atom direkt an die Carboxylgruppe (COOH) gebunden.

Besonders bevorzugt hat die Monocarbonsäure 5 bis 15 C-Atome, besonders bevorzugt 8 bis 12 und insbesondere 9 oder 10 C-Atome. Besonders bevorzugt hat die Monocarbonsäure ein quaternäres C-Atom direkt gebunden an die Carboxylgruppe.

Derartige Monocarbonsäuren sind bekannt als Versatic Säuren® (Shell) .

Genannt sei z.B. 2,2-Dimethylolpropionsäure, 2,2-Dimethylbuttersäure, 2-Ethylbuttersäure, 2-Methylbuttersäure.

Der jeweilige Monovinylester der Monocarbonsäure ist erhältlich durch Veresterung mit Vinylalkohol.

Weitere Monomere d) können z.B. Alkylacrylate oder andere Vinylester sein. Die Mitverwendung weiterer Monomere ist nicht notwendig, um die gewünschte Wirkung als Verdicker zu erreichen.

Das Copolymerisat kann durch radikalische Polymerisation der Verbindungen a) bis d) erhalten werden.

Geeignet ist insbesondere die Lösungspolymerisation in Wasser oder einem Gemisch von Wasser und organischem Lösemittel.

Das Copolymerisat liegt vorzugsweise als Lösung oder oder Lösung in Wasser vor, wobei der Gehalt des Copolymerisats z.B. 5 bis 70 Gew.-%, bevorzugt 20 bis 60 Gew.-%, bezogen auf die Lösung oder Dispersion (Wasser + Copolymerisat betragen kann.

Das Copolymerisat wird vorzugsweise in Form der wäßrigen Lösung oder Dispersion verwendet.

Das Copolymerisat hat vorzugsweise einen K-Wert von 30 bis 100. Der K-Wert nach Fikentscher (Cellulose-Chemie 13, 1932, Seite 58-64) ist ein Maß für das Molekulargewicht und wird an einer 1 % Lösung des Copolymerisats in Wasser bei 23°C gemessen.

Das Copolymerisat eignet sich als Verdicker für wäßrige Dispersionen von Polymeren. Es kann sich dabei z.B. um radikalisch polymerisierte Polymere, Polyester oder Polyurethane handeln.

Die Polymeren liegen in der wäßrigen Dispersion in Form dispergierter Teilchen vor. Die dispergierten Teilchen können durch Emulgatoren der Schutzkolloide stabilisiert sein, die Polymeren können jedoch auch durch den Einbau hydrophiler Gruppen selbstdispergierend sein.

Wäßrige Dispersionen von radikalisch polymerisierten Polymeren können leicht durch Emulsionspolymerisation erhalten werden.

Wäßrige Dispersionen von radikalisch polymerisierten Polymeren, Polyurethanen und Polyestern können z.B. auch durch Lösungspolymerisation in einem organischen Lösemittel und anschließende Dispergierung des Polymeren in Wasser erhalten werden.

Im Falle der radikalisch polymerisierten Polymere sind Polymere bevorzugt, welche zu mehr als 50 Gew.-% aus sogenannten Hauptmonomeren, ausgewählt aus C 1- bis C 18- Alkyl(meth)acrylaten, Vinylestern von Carbonsäuren mit 1 bis 20 C-Atomen, vinylaromatischen Verbindungen mit bis zu 20 C-Atomen, Vinylhalogeniden, nicht aromatischen Kohlenwasserstoffen mit einer oder zwei konjugierten Doppelbindungen oder Mischungen dieser Monomeren, aufgebaut sind.

Das Copolymerisat aus den Monomeren a) bis d) kann im Falle der Verwendung als Verdicker den Polymerdispersionen in der gewünschten Menge zu gesetzt werden. Geeignete Mengen sind 0,2 bis 20 Gew.-Teile, besonders bevorzugt 0,5 bis 5 Gew.-Teile und ganz besonders bevorzugt 0,7 bis 2,5 Gew.-Teile Copolymerisat auf 100 Gew.-Teile des Polymeren.

Die wäßrige Polymerdispersion kann je nach Verwendungszweck neben dem Verdicker weitere Zusatzstoffe, z.B. Farbstoffe, Füllstoffe, Pigmente, Filmbindemittel, Entschäumer etc. enthalten. Als Verwendungen seinen Klebstoffe, Beschichtungsmittel, Anstriche oder Imprägnierungsmittel genannt. Das Copolymerisat wirkt in den wäßrigen Dispersionen als Verdicker, ohne die anwendungstechnischen Eigenschaften bei der Verwendung der Dispersion zu verschlechtern. Insbesondere wird die Transparenz von Beschichtungen und die Haftung im Falle der Verwendung als Klebstoff nicht negativ beeinflußt.

### Beispiel

### Herstellung eines Verdickers

### Vorlage:

| | |
|---|---|
| 113,42 ml | von Zulauf 1 |
| 10,89 ml | von Zulauf 3 |
| 14,79 g | iso-Propanol |

### Zulauf 1

| | |
|---|---|
| 311,93 g | N-Vinylpyrrolidon |
| 329,63 g | Vinylacetat |
| 26,73 g | VeoVa 9 (Vinylester der Verstaicsäure) |
| 45,44 g | iso-Propanol |
| 269,55 g | entsalztes Wasser |

### Zulauf 2: 222,6 g N-Vinylpyrrolidon

### Zulauf 3

| | |
|---|---|
| 42,74 g | iso-Propanol |
| 2,27 g | 2,2'-Azobis(methylbutyronitril) |

### Zulauf 4

| | |
|---|---|
| 642,08 g | entsalztes Wasser |
| 0,38 g | Wasserstoffperoxid, 50 %ig |

### Zulauf 5

| | |
|---|---|
| 1225,63 g | entsalztes Wasser |

Die Vorlage wird in einem Druckkessel bei 0,5 bar vorgelegt und auf ca. 70°C aufgeheizt.

Der Zulauf 2 und der Restzulauf 1 werden gemischt (Zulaufmischung).

Die Zulaufmischung wird über 4 Stunden und der Zulauf 3 bei gleichzeitigem Start über 3,5 Stunden zudosiert. Nach Ende des Zulauf 3 wird Zulauf 4 in 0,5 Stunden zudosiert.

Nach Ende von Zulauf 3 wird die Temperatur noch insgesamt 2 Stunden bei ca. 72°C gehalten. Danach wird Zulauf 5 zugegeben und das organische Lösungsmittel abdestilliert.

Mit Wasser wird ein Feststoffgehalt von 30 Gew.-% eingestellt. Der K-Wert des erhaltenen Copolymerisats betrug 56, die Viskosität einer 20 Gew.-%igen Lösung bei 23°C nach DIN 53211 beträgt 77 sec.

Die Viskosität nach ? beträgt 3100 mPas (23°C) bei einem Geschwindigkeitsgefälle von 250 s⁻¹ (DIN EN ISO 3219) Der pH beträgt 4,3.

Vergleichsbeispiel

Die Durchführung des Vergleichsbeispiels entsprach der des Beispiels.

Die Zusammensetzung des Zulauf 1 war jedoch:

| | |
|---|---|
| 311,93 g | N-Vinylpyrrolidon |
| 356,36 g | Vinylacetat |
| 45,44 g | iso-Propanol |
| 269,55 g | entsalztes Wasser |

Mit Wasser wird ein Feststoffgehalt von 30 Gew.-% eingestellt. Der K-Wert des Copolymerisats beträgt 63. Die Viskosität einer 20 Gew.-%igen Lösung bei 23°C nach DIN 53211 beträgt 55 s.

Die Viskosität einer 30 Gew.-%igen Lösung beträgt 2500 mPas bei einem Geschwindigkeitsgefälle von 250 s⁻¹ (23°C).

**Tabelle 1: Zusammensetzung der Verdicker in Gew.-%**

| | Beispiel | Vergleichsbeispiel |
|---|---|---|
| N-Vinylpyrrolidon | 60 | 60 |
| Vinylacetat | 37 | 40 |
| VeoVa 9* | 3 | - |

| | | |
|---|---|---|
| * Vinylester der Versaticsäure mit 9 C-Atomen (CAS Nummer 54423-67-5) | | |

### II. Prüfung als Verdicker in wäßrigen Polymerdispersionen

1 Gew.-% des 30 %igen Verdickers aus Beispiel 1 bzw. Vergleichsbeispiel 2 wurde mit 99 Gew.-% der handelsüblichen Dispersion Acronal V 210 (69 %ige Acrylat-Dispersion) bzw. Luphen D 200 A (40 %ige Polyurethandispersion) bei 23°C unter Rühren gemischt. Nach 24 Stunden wurde die Viskosität der verdickten und nicht verdickten Proben gemessen.

**Tabelle 2: Zusammenstellung der Viskosität der reinen Dispersion und der verdickten Dispersion mit dem Verdicker aus Beispiel 1 und Vergleichsbeispiel 1**

| Probe | Viskosität in mPas bei einem Geschwindigkeitsgefälle von 250s-¹ und 23°C |
|---|---|
| Acronal V 210 ohne Verdicker | 250 |
| Acronal V 210 mit 1 % Verdicker aus dem Beispiel | 2200 |
| Acronal V 210 mit 1 % Verdicker aus dem Vergleichsbeispiel | 400 |
| Luphen D 200 A | 55 |
| Luphen D 200 A mit 1 % Verdicker aus dem Beispiel | 180 |
| Luphen D 200 A mit 1% Verdicker aus dem Vergleichsbeispiel | 60 |

## Patentansprüche

1. Verwendung eines Copolymerisats aufgebaut aus
a) 30 bis 79,5 Gew.-% N-Vinylpyrrolidon
b) 20 bis 69,5 Gew.-% Vinylacetat
c) 0,5 bis 25 Gew.-% eines Monovinylesters einer C₄- bis C₂₀-Monocarbonsäure
d) 0 bis 40 Gew.-% einer weiteren, copolymerisierbaren, ethylenisch ungesättigten Verbindung,
wobei sich die Gewichtsprozente jeweils auf das Copolymerisat beziehen, als Verdicker für wäßrige Polymerdispersion.

2. Verwendung gemäß Anspruch 1, wobei es sich bei c) um den Monovinylester einer verzweigten Monocarbonsäure mit mindestens einem tertiären oder quaternären C-Atom handelt.

3. Verwendung gemäß Anspruch 1 oder 2, wobei es sich bei c) um den Monovinylester einer C₅- bis C₁₅-Monocarbonsäure handelt.

4. Verwendung gemäß einem der Ansprüche 1 bis 3, wobei es sich bei c) um den Monovinylester einer Versaticsäure handelt.

5. Wäßrige Polymerdispersionen, enthaltend als Verdicker ein Copolymerisat gemäß einem der Ansprüche 1 bis 4.

6. Wäßrige Dispersion gemäß Anspruch 5, wobei es sich bei der wäßrigen Polymerdispersion um eine Dispersion eines radikalisch polymerisierten Polymeren, eines Polyesters oder eines Polyurethans handelt.

7. Wäßrige Dispersion gemäß Anspruch 5, wobei es sich bei dem radikalisch polymerisierten Polymer um ein Polymer handelt, welches zu mehr als 50 Gew.-% aus sogenannten Hauptmonomeren, ausgewählt aus C₁- bis C₁₈-Alkyl (meth) acrylaten, Vinylestern von Carbonsäuren mit 1 bis 20 C-Atomen, vinylaromatischen Verbindungen mit bis zu 20 C-Atomen, Vinylhalogeniden, nicht aromatischen Kohlenwasserstoffen mit einer oder zwei konjugierten Doppelbindungen oder Mischungen dieser Monomeren, aufgebaut ist.

8. Wäßrige Dispersion gemäß einem der Ansprüche 5 bis 7, enthaltend 0,2 bis 20 Gew.-Teile des verdickend wirkenden Copolymerisats, bezogen auf 100 Gew.-Teile des dispergierten Polymeren.

9. Copolymerisat aufgebaut aus
a) 30 bis 79,5 Gew.-% N-Vinylpyrrolidon
b) 20 bis 69,5 Gew.-% Vinylacetat
c) 0,5 bis 25 Gew.-% eines Monovinylesters einer verzweigten C₄- bis C₂₀-Monocarbonsäure mit mindestens einem tertiären oder quaternären C-Atom
d) 0 bis 40 Gew.-% einer weiteren, copolymerisierbaren, ethylenisch ungesättigten Verbindung,
wobei sich die Gewichtsprozente jeweils auf das Copolymerisat beziehen.

## Claims

1. The use of an addition copolymer composed of
a) from 30 to 79.5% by weight of N-vinylpyrrolidone
b) from 20 to 69.5% by weight of vinyl acetate
c) from 0.5 to 25% by weight of a monovinyl ester of a C₄ to C₂₀ monocarboxylic acid
d) from 0 to 40% by weight of a further, copolymerizable, ethylenically unsaturated compound,
the percentages by weight in each case being based on the said copolymer, as a thickener for an aqueous polymer dispersion.

2. The use according to claim 1, wherein c) comprises the monovinyl ester of a branched monocarboxylic acid having at least one tertiary or quaternary carbon atom.

3. The use according to claim 1 or 2, wherein c) comprises the monovinyl ester of a C₅ to C₁₅ monocarboxylic acid.

4. The use according to any of claims 1 to 3, wherein c) comprises the monovinyl ester of a Versatic acid.

5. An aqueous polymer dispersion comprising as thickener a copolymer according to any of claims 1 to 4.

6. The aqueous dispersion according to claim 5, which comprises a dispersion of a free-radically polymerized polymer, of a polyester or of a polyurethane.

7. The aqueous dispersion according to claim 5, wherein said free-radically polymerized polymer is a polymer composed to the extent of more than 50% by weight of principal monomers selected from C₁ to C₁₈ alkyl (meth)acrylates, vinyl esters of C₁ to C₂₀ carboxylic acids, vinylaromatic compounds having up to 20 carbon atoms, vinyl halides, nonaromatic hydrocarbons having one or two conjugated double bonds, or mixtures of these monomers.

8. The aqueous dispersion according to any of claims 5 to 7, comprising from 0.2 to 20 parts by weight of the thickening copolymer per 100 parts by weight of the dispersed polymer.

9. An addition copolymer composed of
a) from 30 to 79.5% by weight of N-vinylpyrrolidone
b) from 20 to 69.5% by weight of vinyl acetate
c) from 0.5 to 25% by weight of a monovinyl ester of a branched C₄ to C₂₀ monocarboxylic acid having at least one tertiary or quaternary carbon atom
d) from 0 to 40% by weight of a further, copolymerizable, ethylenically unsaturated compound,
the percentages by weight in each case being based on the said copolymer.

## Revendications

1. Utilisation d'un copolymère constitué de
a) 30 à 79,5 % en poids de N-vinylpyrrolidone,
b) 20 à 69,5 % en poids d'acétate de vinyle,
c) 0,5 à 25 % en poids d'un ester monovinylique d'un acide monocarboxylique en C₄-C₂₀,
d) 0 à 40 % en poids d'un autre composé éthyléniquement insaturé, copolymérisable,
les pour-cent en poids se rapportant chaque fois au copolymère, comme épaississant pour une dispersion aqueuse de polymère.

2. Utilisation suivant la revendication 1, dans laquelle, pour ce qui concerne c), il s'agit d'ester monovinylique d'un acide monocarboxylique ramifié comportant au moins un atome de C tertiaire ou quaternaire.

3. Utilisation suivant la revendication 1 ou 2, dans laquelle, pour ce qui concerne c), il s'agit de l'ester monovinylique d'un acide monocarboxylique en C₅-C₁₅.

4. Utilisation suivant l'une des revendications 1 à 3, dans laquelle, pour ce qui concerne c), il s'agit de l'ester monovinylique d'un acide versatique.

5. Dispersion aqueuse de polymère, contenant comme épaississant un copolymère suivant l'une des revendications 1 à 4.

6. Dispersion aqueuse suivant la revendication 5, dans laquelle, pour ce qui concerne la dispersion aqueuse de polymère, il s'agit d'une dispersion d'un polymère polymérisé par voie radicalaire, d'un polyester ou d'un polyuréthane.

7. Dispersion aqueuse suivant la revendication 5, dans laquelle, pour ce qui concerne le polymère polymérisé par voie radicalaire, il s'agit d'un polymère qui est constitué pour plus de 50 % en poids de ce que l'on appelle des monomères principaux, choisis parmi des (méth)acrylates d'alkyle en C₁-C₁₈, des esters vinyliques d'acides carboxyliques comportant 1 à 20 atomes de C, des composés vinyl-aromatiques comportant jusqu'à 20 atomes de C, des halogénures de vinyle, des hydrocarbures non aromatiques comportant une ou deux doubles liaisons conjuguées ou des mélanges de ces monomères.

8. Dispersion aqueuse suivant l'une des revendications 5 à 7, contenant 0,2 à 20 parties en poids du copolymère à action d'épaississement, par rapport à 100 parties en poids du polymère dispersé.

9. Copolymère constitué de
a) 30 à 79,5 % en poids de N-vinylpyrrolidone,
b) 20 à 69,5 % en poids d'acétate de vinyle,
c) 0,5 à 25 % en poids d'un ester monovinylique d'un acide monocarboxylique en C₄-C₂₀ ramifié comportant au moins un atome de C tertiaire ou quaternaire,
d) 0 à 40 % en poids d'un autre composé éthyléniquement insaturé, copolymérisable,
les pour-cent en poids se rapportant chaque fois au copolymère.
